# EUROPÄISCHE PATENTSCHRIFT

(11) **EP 0 719 195 B1**
(45) Veröffentlichungstag und Bekanntmachung des Hinweises auf die Patenterteilung: **21.05.1997**
(21) Anmeldenummer: 94923723.4
(22) Anmeldetag: 12.07.1994
(51) Int. Cl.: B23B 29/034

(54) **WERKZEUGKOPF FÜR DEN EINSATZ IN WERKZEUGMASCHINEN**
TOOL HEAD FOR MACHINE-TOOLS
TETE D'OUTIL UTILISABLE DANS DES MACHINES-OUTILS

(30) Priorität: 13.09.1993 DE 4330822
(43) Veröffentlichungstag der Anmeldung: 03.07.1996
(60) Teilanmeldung: 96116560.2
(73) Patentinhaber: KOMET Präzisionswerkzeuge Robert Breuning GmbH, D-74354 Besigheim (DE)
(72) Erfinder: SCHNEIDER, Eberhardt, D-74354 Besigheim (DE); SCHEER, Gerhard, D-74369 Löchgau (DE)
(74) Vertreter: Wolf, Eckhard, Dr.-Ing.
(86) Internationale Anmeldenummer: EP9402273
(87) Internationale Veröffentlichungsnummer: WO9507785

(56) Entgegenhaltungen:
- DE-A- 2 010 200

## Beschreibung

Die Erfindung betrifft einen Werkzeugkopf für den Einsatz in Werkzeugmaschinen mit einem Grundkörper, einem axial über den Grundkörper überstehenden, mit einer rotierenden Maschinenspindel kuppelbaren Werkzeugschaft, mit mindestens einem quer zur Grundkörperachse verstellbaren, eine stirnseitig überstehende Werkzeugaufnahme aufweisenden Schieber, mit einer Meßeinrichtung zur direkten Messung des Verstellwegs des Schiebers relativ zum Grundkörper, mit einer im Grundkörper angeordneten, mit der Meßeinrichtung verbundenen Meßelektronik, mit einem im Grundkörper angeordneten, in Verstellrichtung auf den Schieber einwirkenden, vorzugsweise elektrischen Verstellmotor und mit einer Stromversorgungseinrichtung für die Meßelektronik und gegebenenfalls den Verstellmotor. Eine Vorrichtung dieser Art ist aus dem Dokument DE-A-2010200 bekannt.

Um den Schieber und das von dessen Werkzeugaufnahme getragene Schneidwerkzeug genau einstellen zu können, ist es notwendig, den Verstellweg des Schiebers exakt zu messen. Hierzu ist es bekannt (WO91/03345), den Verstellweg des Schiebers relativ zum Grundkörper auf direktem Wege beispielsweise mit einem optischen oder kapazitiven Wegmeßsystem zu messen und die Meßergebnisse über einen drahtlosen, vorzugsweise optoelektronischen Datenaustausch extern auszuwerten. Weiter ist es aus dieser Druckschrift bekannt, im Grundkörper einen in Verstellrichtung auf den Schieber einwirkenden Verstellmotor vorzusehen, der gleichfalls über eine Fernsteuerung angesteuert werden kann. Die Anordnung des Verstellmotors im Werkzeugzeugkopf ist bisher noch nicht befriedigend gelöst. Sie bereitet Schwierigkeiten, wenn man berücksichtigt, daß sich die Drehbewegungen des Werkzeugkopfes und des Drehmotors vor allem bei Beschleunigungs-und Abbremsvorgängen in unerwünschter Weise überlagern können und daß vor allem bei kleinen Feinstverstellköpfen eine kompakte Bauweise erwünscht ist.

Ausgehend hiervon liegt der Erfindung die Aufgabe zugrunde, einen Werkzeugkopf der eingangs angegebenen Art zu entwickeln, der eine kompakte Bauweise und einen störungsfreien Betrieb gewährleistet.

Zur Lösung dieser Aufgabe wird die in den Anspruch 1 angegebenen Merkmalskombinationen vorgeschlagen. Vorteilhafte Ausgestaltungen und Weiterbildungen der Erfindung ergeben sich aus den abhängigen Ansprüchen.

Die erfindungsgemäße Lösung geht von dem Gedanken aus, daß eine Entkopplung der Drehbewegungen des Verstellmotors und des Werkzeugkopfes bei kompakter Bauweise dadurch erzielt werden kann, daß der Verstellmotor mit seinem im wesentlichen zylindrischen Motorgehäuse in quer zur Grundkörperachse ausgerichteten, die Grundkörperachse schneidenden Querausnehmung des Grundkörpers mit parallel zur Querausnehmung ausgerichteter Motorabtriebswelle angeordnet ist. Eine weitere Verbesserung in dieser Hinsicht wird dadurch erzielt, wenn die Querausnehmung zur Aufnahme des Verstellmotors quer zur Verstellrichtung des Schiebers im Grundkörper angeordnet ist, wobei auch hier von Vorteil ist, wenn das Wegmeßsystem in der Verstellrichtung des Schiebers die Grundkörperachse schneidet.

Um beim Anfahren des Verstellmotors die unerwünschten Anlaufstromspitzen zu reduzieren, ist das Motorgehäuse axial und vorzugsweise auch in Verdrehrichtung elastisch am Grundkörper eingespannt.

Eine besonders kompakte Bauweise wird vorteilhafterweise dadurch erzielt, daß die Motorabtriebswelle ein das abtriebseitige Ende des Motorgehäuses topfartig übergreifendes, mit einem Verstellmechanismus des Schiebers gekoppeltes Abtriebszahnrad trägt, das vorteilhafterweise mit seiner Topfinnenseite an einem das abtriebseitige Ende des Motorgehäuses axial und radial übergreifenden, eine Zentralbohrung für den Durchgriff der Abtriebswelle aufweisenden Grundkörperteil vorzugsweise axial und radial gelagert ist. Dadurch wird erreicht, daß die radial nach außen weisenden Zähne des Abtriebszahnrades das Motorgehäuse in der Nähe des abtriebseitigen Endes konzentrisch umgreifen. Auf seiner Topfaußenseite ist das Abtriebszahnrad zusätzlich in einem vorzugsweise topfförmigem, mit dem Grundkörper starr verbundenen Deckelteil gelagert.

Eine vorteilhafte Ausgestaltung der Erfindung sieht einen Verstellmechanismus für den Schieber vor, der eine außermittig im Grundkörper gelagerte, einen Gleitstein mit Schrägverzahnung tragende Spindel und ein mit einer komplementären Schrägverzahnung versehenes, mit dem Schieber starr verbundenes Gegenstück aufweist, welche Spindel ein mit dem Abtriebszahnrad im Bereich des den Verstellmotor topfartig übergreifenden Teils kämmendes Antriebsritzel trägt.

Vorteilhafterweise ist die Abtriebswelle des Verstellmotors als Mehrkant, vorzugsweise als Sechskant ausgebildet, der in einen Innenmehrkant des Abtriebszahnrads eingreift, wobei der Innenmehrkant des Abtriebszahnrads eine größere axiale Erstreckung als die Abtriebswelle aufweist, so daß er von außen her mit einem entsprechenden Mehrkantwerkzeug für die Handverstellung zuganglich ist.

Nach außen hin ist der Grundkörper zweckmäßig von einem vorzugsweise metallischen Mantel umgeben, in welchem Fensteröffnungen zur Aufnahme je eines Infrarot-Sende-Empfängers im Winkelabstand voneinander angeordnet sind. Die Drehmitnahme des Mantels erfolgt dadurch, daß der Verstellmotor an dem der Abtriebsseite gegenüberliegenden Ende mit einem Spanndeckel am Grundkörper einspannbar ist, der einen radial nach außen überstehenden Ansatz für den Eingriff in eine entsprechende Ausnehmung des Mantels aufweist.

Eine bevorzugte Alternative oder Ausgestaltung der Erfindung sieht vor, daß die Meßeinrichtung eine in einem grundkörperfesten, in eine taschenartige Ausnehmung des Schiebers eingreifenden Spulengehäuse angeordnete Tauchspule und einen die taschenartige Ausnehmung und die Tauchspule in Verschieberichtung des Schiebers und quer zur Motorgehäuseachse durchgreifenden schieberfesten stabförmigen Magnetanker aufweist. Das nach dem Tauchspulenprinzip arbeitende Meßsystem hat gegenüber dem bekannten kapazitiven Meßsystem den Vorteil, daß eine absolute Wegmessung ohne Datenverlust bei stromabschaltung möglich ist und daß der Einbau geringere Anforderungen an die einzuhaltenden Toleranzen erfordert.

Um eine Justierung des Wegmeßsystems zu ermöglichen, ist der Magnetanker mit seinem einen Ende zweckmäßig an einem in eine in Verschieberichtung des Schiebers ausgerichtete Gewindebohrung eingedrehten Justierhalter stirnseitig überstehend befestigt, während er an seinem dem Justierhalter gegenüberliegenden Ende einen in eine Linearführung innerhalb des Schiebers eingreifenden Führungszapfen trägt. Um den Magnetanker nach erfolgter Justage in seiner Nullstellung am Schieber arretieren zu können, ist der Justierhalter durch eine in einer vorgegebenen Verschiebelage des Schiebers von außen her zugängliche Stellschraube am Schieber festlegbar.

Das vorzugsweise aus einem antimagnetischen Material bestehende Spulengehäuse weist seitlich überstehende Montagelappen zur Befestigung am Grundkörper auf. Es weist zweckmäßig einen runden geschlossenen Spulenraum zur Aufnahme der Tauchspule auf, und ist auf der dem Motor zugewandten Seite, vorzugsweise im Bereich zwischen den beiden Montagelappen, mit einer das Motorgehäuse an seinem Umfang teilweise umfassenden Ausnehmung versehen. Die daraus resultierende gegenseitige Verzahnung zwischen Spulengehäuse und Motorgehäuse ermöglicht eine kompakte Bauweise des Werkzeugkopfes.

Um das Innere des Werkzeugkopfes flüssigkeitsdicht abzudichten und trotzdem ein reibungsarmes Verschieben des Schiebers gegenüber dem Grundkörper zu gewährleisten, wird gemäß einer vorteilhaften Ausgestaltung der Erfindung vorgeschlagen, daß der Schieber mit seiner Werkzeugaufnahme durch ein stirnseitiges Langloch des Grundkörpers hindurchgreift und außerhalb des Langlochs eine radial gegen den Schieber abgedichtete, mit dem Schieber mitbewegte Ringscheibe trägt, die federnd gegen einen in einer stirnseitigen Ringnut des Grundkörpers angeordneten, vorzugsweise als Quadring ausgebildeten elastomeren Dichtungsring so anpreßbar ist, daß zwischen Ringscheibe und Grundkörper ein über den Umfang der Ringscheibe im wesentlichen konstanter Spalt mit einer Weite von 5 bis 20 µm verbleibt. Die Wandstärker der Ringscheibe ist zweckmäßig durch Materialabtrag an ihrer dem Grundkörper zugewandten Fläche unter Einstellung der vorgegebenen Spaltweite abstimmbar, während das Anpressen der Ringscheibe gegen den Dichtungsring durch einen in einer schieberseitigen Umfangsnut angeordneten Federring erfolgen kann.

Um die Gleitfläche des Schiebers im Grundkörper durchgehend schleifen und dennoch eine stabile Deckelmontage gewährleisten zu können, wird nach einer weiteren vorteilhaften Ausgestaltung der Erfindung vorgeschlagen, daß der Grundkörper eine radial durchgehende, endbegrenzungsfreie Gleitfläche für den Schieber aufweist, und daß auf der Seite des Gleitsteins ein Abstandshalter zwischen Grundkörper und einem Deckelteil angeordnet ist. Der Abstandshalter sorgt außerdem dafür, daß die Rückkräfte aus der Schrägverzahnung des Verstellmechanismus für den Schieber aufgenommen und in den Grundkörper eingeleitet werden können.

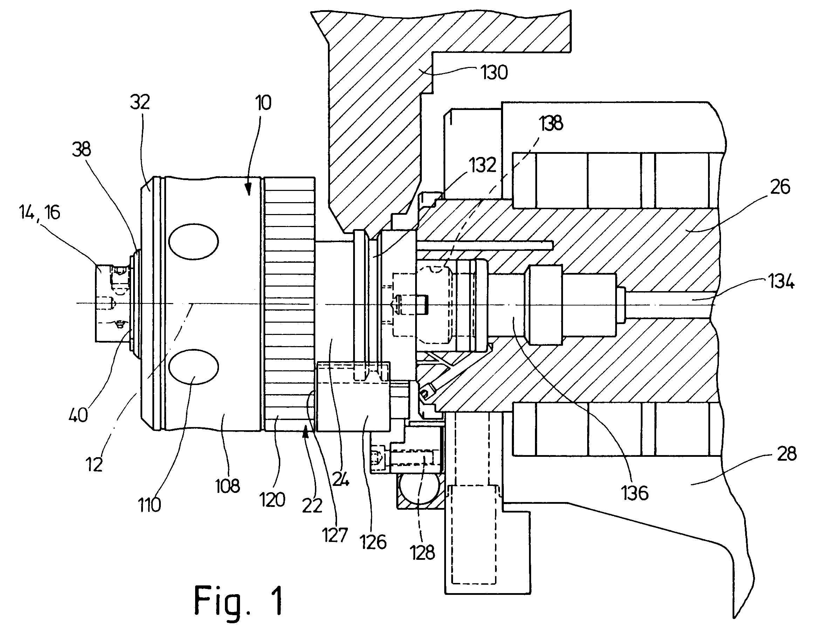

Im folgenden wird die Erfindung anhand eines in der Zeichnung in schematischer Weise dargestellten Ausführungsbeispiels näher erläutert. Es zeigen
- Fig. 1: eine Seitenansicht eines in eine Maschinenspindel eingespannten Feindrehkopfs mit Verstellmechanismus, Fernbedienung und externer Stromzufuhr;

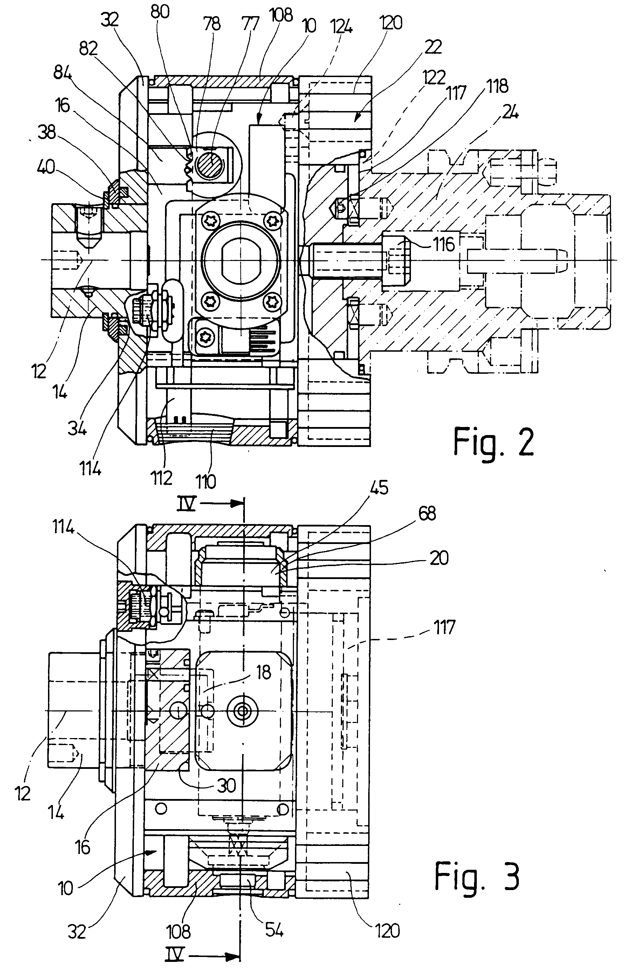

- Fig. 2: einen Längsschnitt durch den Feindrehkopf nach Fig. 1 mit Werkzeugschaft;
- Fig. 3: einen gegenüber Fig. 2 um 90° gedrehten Längsschnitt durch den Feindrehkopf;

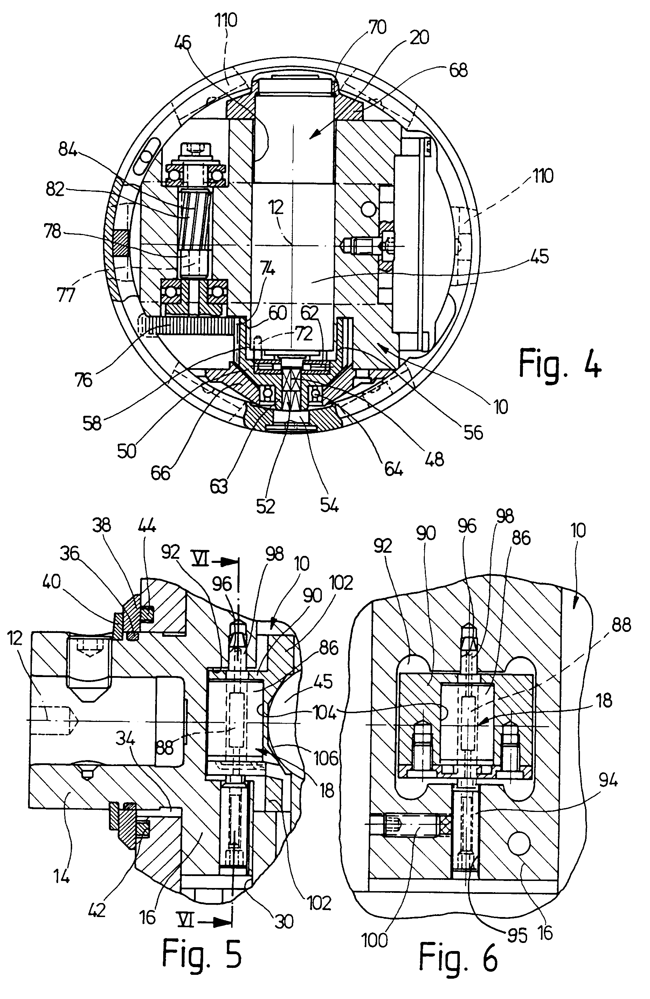

- Fig. 4: einen Schnitt entlang der Schnittlinie IV-IV der Fig. 3;
- Fig. 5: einen vergrößerten Ausschnitt aus Fig. 2 mit geschnittener Längenmeßeinrichtung;
- Fig. 6: einen Schnitt entlang der Schnittlinie VI-VI der Fig. 5.

Der in der Zeichnung dargestellte Feindrehkopf besteht im wesentlichen aus einem Grundkörper 10, einem quer zur Drehachse 12 des Feindrehkopfs gegenüber dem Grundkörper 10 verstellbaren, eine Werkzeugaufnahme 14 für ein Schneidwerkzeug tragenden Schieber 16, einer Meßeinrichtung 18 zur direkten Verstellwegmessung des Schiebers 16 relativ zum Grundkörper 10, einem in Verstellrichtung auf den Schieber einwirkenden elektrischen Verstellmotor 20, einer Stromversorgungseinrichtung 22 und einem axial über den Grundkörper 10 überstehenden Werkzeugschaft 24, der mit einer Maschinenspindel 26 einer Werkzeugmaschine 28 kuppelbar ist.

Der Schieber 16 ist im Grundkörper 10 in einer quer zur Grundkörperachse 12 ausgerichteten, durchgehenden, endbegrenzungsfreien Führungsnut 30 angeordnet, die nach außen hin über ein mit dem Grundkörper 10 endseitig über Abstandshalter starr verbundenes Deckelteil 32 begrenzt ist. Mit seiner Werkzeugaufnahme 14 greift der Schieber 16 durch ein Langloch 34 des Deckelteils 32 nach außen hindurch und trägt außerhalb des Langlochs 34 eine über den Dichtungsring 36 radial gegen die Werkzeugaufnahme 14 abgedichtete, mit dem Schieber mitbewegte Ringscheibe 38, die mit Hilfe des Federrings 40 federnd gegen einen in einer Ringnut 42 des Deckelteils angeordneten Quadring 44 so anpreßbar ist, daß zwischen der Ringscheibe 38 und dem Deckelteil 32 ein über den Umfang der Ringscheibe 38 im wesentlichen konstanter Spalt mit einer Weite von 10 µm verbleibt. Mit dieser Maßnahme wird vermieden, daß beim Verschieben des Schiebers die metallische Ringscheibe 38 auf dem metallischen Deckelteil 32 reibt.

Der Verstellmotor 20 weist ein im wesentlichen zylindrisches Motorgehäuse 45 auf, das in einer quer zur Verschieberichtung des Schiebers 16 und der Grundkörperachse 12 verlaufenden, die Grundkörperachse 12 schneidenden Querausnehmung des Grundkörpers 10 angeordnet ist. Die axial überstehende Abtriebswelle 48 ist als Sechskant ausgebildet. Sie trägt ein topfförmig ausgebildetes Abtriebszahnrad 50, dessen Innensechskant 52 länger als die Abtriebswelle 48 ist, so daß von außen her bei abgenommener Verschlußschraube 54 ein entsprechendes Sechskantwerkzeug zur Handverstellung des Abtriebszahnrades in den Innensechskant 52 einführbar ist. Das Abtriebszahnrad 50 übergreift mit seinem nach innen weisenden, außenverzahnten Mantelteil 56 das abtriebseitige Ende des Motorgehäuses 45 und stützt sich dort außenseitig an einem das betreffende Gehäuseende aufnehmenden Hülsenansatz 58 über ein Gleitlager 60 radial ab. Weiter ist das Abtriebszahnrad 50 mit seiner Topfinnenseite über ein Wälzlager 62 axial an dem Hülsenansatz 58 gelagert, während es auf der Topfaußenseite mit seinem den Innensechskant 52 aufweisenden Hohlzapfen 63 in einem als Wälzlager 64 ausgebildeten Drehlager eines grundkörperfesten topfförmigen Deckelteils 66 gelagert ist. Auf seiner der Abtriebsseite gegenüberliegenden Seite ist der Verstellmotor 20 mit einem Spanndeckel 68 und einem elastomeren Ring 70 axial gegen den abtriebsseitigen Hülsenansatz 58 gespannt, wobei die Verdrehsicherung des Motorgehäuses 45 über die abtriebsseitig angeordneten exzentrischen Stifte 72 erfolgt. Durch die axial elastische Einspannung mit Verdrehelastizität ergibt sich ein weicher Anlauf des Motors, wodurch Anlaufstromspitzen reduziert werden können. Unter Berücksichtigung der am Motor angreifenden Zentrifugalkraft gilt dies insbesondere dann, wenn der Schwerpunkt des Verstellmotors zum elastischen Ring 70 hin gegenüber der Drehachse 12 des Grundkörpers 10 radial verschoben ist.

Über das Abtriebszahnrad 50 wird ein außermittig angeordneter Verstellmechanismus für den Schieber angetrieben, der ein mit dem Zahnkranz 74 des Abtriebszahnrads 50 kämmendes Antriebsritzel 76 und eine starr mit diesem verbundene Gewindespindel 77 aufweist. Auf der Gewindespindel ist ein Gleitstein 78 mit einer Schrägverzahnung 80 geführt, die mit einer komplementären Schrägverzahnung 82 eines am Schieber 16 angeordneten Gegenstücks 84 kämmt.

Die Meßeinrichtung 18 weist eine grundkörperfeste Tauchspule 86 und einen in Verschieberichtung in die Tauchspule 86 eingreifenden schieberfesten stabförmigen Magnetanker 88 auf. Die Tauchspule 86 ist im wesentlichen mittig im Grundkörper 10 in einem grundkörperfesten Spulengehäuse 90 angeordnet, das von der Motorseite aus zusammen mit der Tauchspule in eine taschenartige Ausnehmung 92 des Schiebers eingreift. Der Magnetanker 88 ist mit seinem einen Ende an einem in eine in Verschieberichtung des Schiebers 16 ausgerichtete Gewindebohrung 95 eingedrehten Justierhalter 94 stirnseitig überstehend befestigt, während er an seinem dem Justierhalter 94 gegenüberliegenden Ende einen in eine Linearführung (Bohrung) 96 innerhalb des Schiebers 16 eingreifenden Führungszapfen 98 trägt. Der Justierhalter 94 ist durch eine in einer vorgegebenen Verschiebelage des Schiebers von außen her zugängliche Stellschraube 100 am Schieber 16 festlegbar. Das Spulengehäuse ist mit seitlich überstehenden Montagelappen 102 versehen und weist auf seiner dem Spulenraum 104 gegenüberliegenden Seite eine im Bereich zwischen den beiden Montagelappen 102 angeordnete, das Motorgehäuse 45 an seinem Umfang teilweise umfassende Ausnehmung 106 auf.

Der Grundkörper 10 wird an seinem Umfang von einem Mantelring 108 aus Metall oder Kunststoff umfaßt, in welchem über den Umfang in gleichen Winkelabständen verteilt angeordnete Fenster 110 für Infrarot-Sende-Empfänger 112 angeordnet sind. Die Sende-Empfänger sorgen für den drahtlosen Datenaustausch zwischen dem Werkzeugkopf und einem externen, computergestützten Fernsteuergerät. Der Datenaustausch kann beispielsweise zu Justierzwecken auch galvanisch über die Schnittstelle 114 erfolgen.

Der Werkzeugschaft 24 für den Anschluß an die Maschinenspindel 26 ist mit einer einzigen Zentralschraube 116 in einer Schaftaufnahme 117 am Grundkörper 10 axial befestigt. Die exzentrisch angeordneten Paßstifte 118 sorgen dabei für die Verdrehsicherung und Drehmomentübertragung.

Auf der Seite des Werkzeugschaftes 24 ist zusätzlich ein ringförmiges Spulengehäuse 120 angeordnet, das zusammen mit dem Werkzeugschaft 24 über dessen radial überstehenden Bund 122 mit der Zentralschraube 116 am Grundkörper befestigt ist. Die Verdrehsicherung des Spulengehäuses 120 erfolgt über die als Senkschrauben ausgebildeten, mit ihrem Schaft in entsprechende Bohrungen des Grundkörpers eingreifenden Mitnehmerbolzen 124.

Im dem Spulengehäuse 120 befindet sich eine in einer mechanisch belastbaren Gußmasse aus Kunststoff oder Kunstharz eingebettete Sekundärspule mit zugehöriger Stabilisierungselektronik, die Bestandteil einer induktiven Übertragungsstrecke der Stromversorgungseinrichtung 22 ist und für die Stromversorgung des Verstellmotors 20 und der im Werkzeugkopf enthaltenen Elektronikschaltungen sorgt. Grundsätzlich ist es möglich, die Induktionsstrecke auch zur bidirektionalen Datenübertragung zu verwenden, indem die Datensignale dem Induktionsstrom gegebenenfalls in beiden Richtungen aufmoduliert werden.

Die Primärspule der induktiven Übertragungsstrecke ist in einem statorseitigen Spulengehäuse 126 angeordnet, das radial außerhalb des Werkzeugschaftes 24 in den freien Zwischenraum zwischen der Stirnfläche der Maschinenspindel 26 und der Stirnfläche des werkzeugkopfseitigen Spulengehäuses 120 eingreift. Zur Einstellung des Luftspalts zwischen der Primär- und der Sekundärspule ist das statorseitige Spulengehäuse 126 an einem statorfesten Halter 128 sowohl in seinem Abstand zum werkzeugkopfseitigen Spulengehäuse 120 als auch in seiner Drehlage um eine zur Drehachse 12 parallele Achse verstellbar angeordnet. Der Halter 128 mit dem Spulengehäuse 126 kann auch nachträglich an eine vorhandene Werkzeugmaschine montiert werden. Das statorseitige Spulengehäuse 126 erstreckt sich nur über einen Teilumfang des Werkzeugschaftes und läßt den überwiegenden Teil des Schaftumfangs für den Zugriff eines Werkzeuggreifers 130 für den automatischen Werkzeugwechsel frei. Beim Werkzeugwechsel wird der Werkzeugkopf an der Greiferrille 132 vom Werkzeuggreifer 130 von der dem statorseitigen Spulengehäuse 126 gegenüberliegenden Seite her erfaßt und bei gelöster Werkzeugkupplung axial gegenüber der Maschinenspindel 26 verschoben. Die Kupplung des Werkzeugkopfes mit der Maschinenspindel 26 erfolgt dabei über einen maschinenseitig über die Zugstange 134 betätigbaren Spannmechanismus 136, der von der Maschinenseite aus in den Hohlraum 138 des Werkzeugschafts 24 eingreift und den Werkzeugkopf unter Herstellung einer Planflächenverspannung und einer Radialverspannung mit der Maschinenspindel 26 kuppelt.

Zusammenfassend ist folgendes festzustellen: Die Erfindung bezieht sich auf einen Werkzeugkopf, insbesondere einen Feinstverstellkopf für den Einsatz in Werkzeugmaschinen. Der Werkzeugkopf ist mit einer rotierenden Maschinenspindel 26 kuppelbar und weist einen quer zur Grundkörperachse 12 verstellbaren, eine stirnseitig überstehende Werkzeugaufnahme 14 aufweisenden Schieber 16, eine Meßeinrichtung 18 zur direkten Messung des Verstellwegs des Schiebers 16 relativ zum Grundkörper 10, einen in Verstellrichtung auf den Schieber 16 einwirkenden Verstellmotor 20 und eine externe Stromversorgungseinrichtung 22 für eine im Werkzeugkopf integrierte Elektronik und den Verstellmotor 20 auf. Um eine kompakte Bauweise bei hoher Verstellgenauigkeit zu gewährleisten, wird der Verstellmotor 20 mit seinem zylindrischen Motorgehäuse 45 in einer quer zur Verstellrichtung des Schiebers 6 und quer zur Grundkörperachse 12 ausgerichteten, die Grundkörperachse 12 schneidenden Querausnehmung 46 des Grundkörpers 10 mit parallel zur Querausnehmung 46 ausgerichteter Motorabtriebswelle 48 angeordnet.

## Patentansprüche

1. Werkzeugkopf für den Einsatz in Werkzeugmaschinen mit einem Grundkörper (10), einem axial über den Grundkörper (10) überstehenden, mit einer rotierenden Maschinenspindel (26) kuppelbaren Werkzeugschaft (24), mit mindestens einem quer zur Grundkörperachse (12) verstellbaren, eine stirnseitig überstehende Werkzeugaufnahme (14) aufweisenden Schieber (16), mit einer Meßeinrichtung (18) zur direkten Messung des Verstellwegs des Schiebers (16) relativ zum Grundkörper (10), mit einer im Grundkörper (10) angeordneten, mit der Meßeinrichtung (18) verbundenen Meßelektronik, mit einem im Grundkörper angeordneten, in Verstellrichtung auf den Schieber (16) einwirkenden, vorzugsweise elektrischen Verstellmotor (20) und mit einer Stromversorgungseinrichtung (22) für die Meßelektronik und gegebenenfalls den Verstellmotor (20), **dadurch gekennzeichnet**, daß der Verstellmotor (20) mit seinem im wesentlichen zylindrischen Motorgehäuse (45) in einer quer zur Grundkörperachse ausgerichteten, die Grundkörperachse (12) schneidenden Querausnehmung (46) des Grundkörpers (10) mit parallel zur Querausnehmung (46) ausgerichteter Abtriebswelle (48) angeordnet ist.

2. Werkzeugkopf nach Anspruch 1, **dadurch gekennzeichnet**, daß die Querausnehmung (46) zur Aufnahme des Verstellmotors (20) quer zur Verstellrichtung des Schiebers (16) im Grundkörper (10) angeordnet ist.

3. Werkzeugkopf nach Anspruch 1 oder 2, **dadurch gekennzeichnet** daß das Motorgehäuse (45) axial elastisch am Grundkörper (10) eingespannt ist.

4. Werkzeugkopf nach einem der Ansprüche 1 bis 3, **dadurch gekennzeichnet**, daß die Motorabtriebswelle (48) ein das abtriebseitige Ende des Motorgehäuses (45) topfartig übergreifendes, mit einem Verstellmechanismus (76 bis 84) des Schiebers (16) gekuppeltes Abtriebszahnrad (50) trägt.

5. Werkzeugkopf nach Anspruch 4, **dadurch gekennzeichnet**, daß das Abtriebszahnrad (50) mit seiner Topfinnenseite an einem das abtriebseitige Ende des Motorgehäuses (45) axial und in Umfangsrichtung übergreifenden, eine Zentralbohrung für den Durchgriff der Abtriebswelle (48) aufweisenden Grundkörperteil (Hülsenansatz 58) vorzugsweise axial und radial gelagert ist.

6. Werkzeugkopf nach Anspruch 4 oder 5, **dadurch gekennzeichnet**, daß das Abtriebszahnrad (50) mit einem Lagerzapfen (63) in einem vorzugsweise topfförmigen, mit dem Grundkörper (10) starr verbundenen Deckelteil (66) gelagert ist.

7. Werkzeugkopf nach einem der Ansprüche 1 bis 6, **dadurch gekennzeichnet**, daß der radial nach außen weisende Zahnkranz (74) des Abtriebszahnrades (50) das Motorgehäuse (45) in der Nähe des abtriebseitigen Endes konzentrisch umgreift.

8. Werkzeugkopf nach einem der Ansprüche 1 bis 7, **gekennzeichnet durch** einen Verstellmechanismus für den Schieber (16), der eine außermittig im Grundkörper (10) gelagerte, einen Gleitstein (78) mit Schrägverzahnung (80) tragende Gewindespindel (77) und ein mit einer komplementären Schrägverzahnung (82) versehenes, mit dem Schieber (16) starr verbundenes Gegenstück (84) aufweist, welche Gewindespindel (77) ein mit dem Abtriebszahnrad (50) im Bereich des das Motorgehäuse (45) topfartig übergreifenden Teils (56,74) kämmendes Antriebsritzel (76) trägt.

9. Werkzeugkopf nach einem der Ansprüche 1 bis 8, **dadurch gekennzeichnet**, daß die Abtriebswelle (48) des Verstellmotors (20) als Mehrkant, vorzugsweise als Sechskant ausgebildet ist, der in einen Innenmehrkant (52) des Abtriebszahnrads (50) eingreift, wobei der Innenmehrkant (52) des Abtriebszahnrads (50) eine größere axiale Erstreckung als die Abtriebswelle (48) aufweist und von außen her mit einem entsprechenden Mehrkantwerkzeug zugänglich ist.

10. Werkzeugkopf nach einem der Ansprüche 1 bis 9, **dadurch gekennzeichnet**, daß der Grundkörper (10) von einem vorzugsweise metallischen Mantel (108) ringförmig umgeben ist, in welchem Fensteröffnungen (110) zur Aufnahme je eines Infrarot-Sende-Empfängers im Winkelabstand voneinander angeordnet sind.

11. Werkzeugkopf nach Anspruch 10, **dadurch gekennzeichnet**, daß der Verstellmotor (20) an dem der Abtriebsseite gegenüberliegenden Ende mit einem Spanndeckel (68) am Grundkörper elastisch einspannbar ist, der vorzugsweise einen radial nach außen überstehenden Ansatz für den Eingriff in eine entsprechende Ausnehmung des Mantels (108) zu dessen Drehmitnahme aufweist.

12. Werkzeugkopf nach einem der Ansprüche 1 bis 11, **dadurch gekennzeichnet**, daß die Meßeinrichtung (18) eine grundkörperfeste Tauchspule (86) und einen die Tauchspule in Verschieberichtung des Schiebers (16) durchgreifenden schieberfesten stabförmigen Magnetanker (88) aufweist.

13. Werkzeugkopf nach Anspruch 12, **dadurch gekennzeichnet**, daß die Tauchspule (86) in einem grundkörperfesten, in eine taschenartige Ausnehmung (92) des Schiebers (16) eingreifenden Spulengehäuse angeordnet ist und daß der schieberfeste stabförmige Magnetanker (88) die taschenartige Ausnehmung (92) und die Tauchspule (86) in Verschieberichtung des Schiebers (16) durchgreift.

14. Werkzeugkopf nach Anspruch 13, **dadurch gekennzeichnet**, daß das Spulengehäuse (90) seitlich überstehende Montagelappen (102) zur Befestigung am Grundkörper (10) aufweist.

15. Werkzeugkopf nach Anspruch 13 oder 14, **dadurch gekennzeichnet**, daß das Spulengehäuse (90) einen geschlossenen Spulenraum (104) aufweist.

16. Werkzeugkopf nach einem der Ansprüche 13 bis 15, **dadurch gekennzeichnet**, daß das Spulengehäuse (90) eine vorzugsweise im Bereich zwischen den beiden Montagelappen (102) angeordnete, in Richtung Verstellmotor (20) offene, das Motorgehäuse (45) an seinem Umfang teilweise umfassende Ausnehmung (106) aufweist.

17. Werkzeugkopf nach einem der Ansprüche 12 bis 16, **dadurch gekennzeichnet**, daß der Magnetanker (88) mit seinem einen Ende an einem in eine in Verschieberichtung des Schiebers ausgerichtete Gewindebohrung eingedrehten Justierhalter (94) stirnseitig überstehend befestigt ist.

18. Werkzeugkopf nach Anspruch 17, **dadurch gekennzeichnet**, daß der Magnetanker (88) an seinem dem Justierhalter (94) gegenüberliegenden Ende einen in eine Linearführung (96) innerhalb des Schiebers (16) eingreifenden Führungszapfen (98) trägt.

19. Werkzeugkopf nach Anspruch 17 oder 18, **dadurch gekennzeichnet**, daß der Justierhalter (94) durch eine in einer vorgegebenen Verschiebelage des Schiebers (16) von außen her zugängliche Feststellschraube (100) am Schieber (16) festlegbar ist.

20. Werkzeugkopf nach einem der Ansprüche 1 bis 19, **dadurch gekennzeichnet**, daß der Schieber (16) mit seiner Werkzeugaufnahme (14) durch ein stirnseitiges Langloch (34) des Grundkörpers (10) hindurchgreift und außerhalb des Langlochs (34) eine radial gegen den Schieber (16) abgedichtete, mit dem Schieber (16) mitbewegte Ringscheibe (38) trägt, die federnd gegen einen in einer stirnseitigen Ringnut (42) des Grundkörpers (10) angeordneten, vorzugsweise als Quadring (44) ausgebildeten elastomeren Dichtungsring so anpreßbar ist, daß zwischen Ringscheibe (38) und Grundkörper (10) ein über den Umfang der Ringscheibe (38) im wesentlichen konstanter Spalt vorzugsweise mit einer Weite von 5 bis 20 µm verbleibt.

21. Werkzeugkopf nach Anspruch 20, **dadurch gekennzeichnet**, daß die Wandstärke der Ringscheibe (38) durch Materialabtrag an ihrer dem Grundkörper (10) zugewandten Fläche unter Einstellung der vorgegebenen Spaltweite abstimmbar ist.

22. Werkzeugkopf nach Anspruch 20 oder 21, **dadurch gekennzeichnet**, daß die Ringscheibe (38) durch einen in einer schieberseitigen Umfangsnut angeordneten Federring (40) gegen den Dichtungsring (44) anpreßbar ist.

23. Werkzeugkopf nach einem der Ansprüche 1 bis 22, **dadurch gekennzeichnet**, daß der Grundkörper (10) eine radial durchgehende, endbegrenzungsfreie Führungsnut (30) für den Schieber (16) aufweist, und daß vorzugsweise auf der Seite des Gleitsteins (78) ein Abstandshalter zwischen dem Grundkörper (10) und einem Deckelteil (32) angeordnet ist.

## Claims

1. A tool head for use in machine tools, having a basic body (10), having a tool shank (24) which extends axially beyond the basic body (10) and can be coupled to a rotating machine spindle (26), having at least one slide (16) which can be adjusted transversely with respect to the basic body axis (12) and has a tool carrier (14) extending beyond the end face, having a measuring device (18) for directly measuring the adjusting path of the slide (16) in relation to the basic body (10), having measuring electronics arranged in the basic body (10) and connected to the measuring device (18), having an adjusting motor (20), preferably electric, arranged in the basic body and acting in the adjusting direction on the slide (16), and having a power supply device (22) for the measuring electronics and, if appropriate, the adjusting motor (20), characterized in that the adjusting motor (20) is arranged along with its substantially cylindrical motor housing (45) in a transverse recess (46) of the basic body (10), aligned transversely with respect to the basic body axis and intersecting the basic body axis (12), with the output shaft (48) aligned parallel with respect to the transverse recess (46).

2. The tool head as claimed in claim 1, wherein the transverse recess (46) for receiving the adjusting motor (20) is arranged in the basic body (10) transversely with respect to the adjusting direction of the slide (16).

3. The tool head as claimed in claim 1 or 2, wherein the motor housing (45) is clamped on the basic body (10) in an axially resilient manner.

4. The tool head as claimed in one of claims 1 to 3, wherein the motor output shaft (48) bears an output gearwheel (50) which reaches in a cup-like manner over the output end of the motor housing (45) and is coupled to an adjusting mechanism (76 to 84) of the slide (16).

5. Tool head according to claim 4, wherein the output gearwheel (50) is mounted, preferably axially and radially, with its cup inner side on a part of the basic body (sleeve attachment 58) which reaches axially and in the circumferential direction over the output end of the motor housing (45) and has a central bore for the passing through of the output shaft (48).

6. The tool head as claimed in claim 4 or 5, wherein the output gearwheel (50) is mounted by a bearing journal (63) in a preferably cup-shaped cover part (66) which is rigidly connected to the basic body (10).

7. The tool head as claimed in one of claims 1 to 6, wherein the radially outward facing toothed rim (74) of the output gearwheel (50) concentrically embraces the motor housing (45) in the vicinity of the output end.

8. The tool head as claimed in one of claims 1 to 7, which comprises an adjusting mechanism for the slide (16) which has a threaded spindle (77), mounted eccentrically in the basic body (10) and bearing a sliding block (78) with oblique toothing (80), and a counterpiece (84), provided with complementary oblique toothing (82) and connected rigidly to the slide (16), which threaded spindle (77) bears a drive pinion (76) meshing with the output gearwheel (50) in the region of the part (56, 74) reaching over the motor housing (45) in a cup-like manner.

9. The tool head as claimed in one of claims 1 to 8, wherein the output shaft (48) of the adjusting motor (20) is designed as a polygon, preferably a hexagon, which engages in a polygonal socket (52) of the output gearwheel (50), the polygonal socket (52) of the output gearwheel (50) having a greater axial extent than the output shaft (48) and being accessible from the outside with a corresponding polygonal tool.

10. The tool head as claimed in one of claims 1 to 9, wherein the basic body (10) is surrounded annularly by a preferably metallic casing (108), in which there are arranged at angular intervals from one another window openings (110) for receiving an infrared transceiver in each case.

11. The tool head as claimed in claim 10, wherein the adjusting motor is adapted such that it can be clamped on the basic body at the end opposite the output side by a clamping cover (68) which preferably has a radially outward extending attachment for engagement in a corresponding recess of the casing (108) for its rotary driving.

12. The tool head as claimed in one of claims 1 to 11, wherein the measuring device (18) has a plunger coil (86), fixed to the basic body, and a bar-shaped magnet armature (88), fixed to the slide and reaching through the plunger coil in the sliding direction of the slide (16).

13. The tool head as claimed in claim 12, wherein the plunger coil (86) is arranged in a coil housing which is fixed to the basic body and engages in a pocket-like recess (92) of the slide (16) and wherein the bar-shaped magnet armature (88), fixed to the slide, reaches through the pocket-like recess (92) and the plunger coil (86) in the sliding direction of the slide (16).

14. The tool head as claimed in claim 13, wherein the coil housing (90) has laterally overhanging assembly lugs (102) for fastening on the basic body (10).

15. The tool head as claimed in claim 13 or 14, wherein the coil housing (90) has a closed coil space (104).

16. The tool head as claimed in one of claims 13 to 15, wherein the coil housing (90) has a recess (106) which is preferably arranged in the region between the two assembly lugs (102), is open in the direction of the adjusting motor (20) and partially embraces the motor housing (45) around its circumference.

17. The tool head as claimed in one of claims 12 to 16, wherein the magnet armature (88) is fastened by its one end, overhanging at the end face, on an adjusting holder (94) turned into a threaded bore aligned in the sliding direction of the slide.

18. The tool head as claimed in claim 17, wherein the magnet armature (88) bears at its end opposite the adjusting holder (94) a guide pin (98), engaging in a linear guide (96) within the slide (16).

19. The tool head as claimed in claim 17 or 18, wherein the adjusting holder (94) can be fixed on the slide (16) by a lock screw (100) which is accessible from the outside in a predetermined sliding position of the slide (16).

20. The tool head as claimed in one of claims 1 to 19, wherein the slide (16) with its tool carrier (14) passes through a slot (34) on the end face of the basic body (10) and, outside the slot (34), bears a washer (38) which is sealed off radially with respect to the slide (16), is moved along with the slide (16) and can be pressed resiliently against an elastomeric sealing ring, which is arranged in an annular groove (42) on the end face of the basic body (10) and is preferably designed as a square ring (44), such that between the washer (38) and the basic body (10) there remains a gap which is substantially constant over the circumference of the washer (38) and preferably has a width of 5 to 20 µm.

21. The tool head as claimed in claim 20, wherein the wall thickness of the washer (38) can be adapted by material removal on its face facing the basic body (10), thereby setting the predetermined gap width.

22. The tool head as claimed in claim 20 or 21, wherein the washer (38) can be pressed against the sealing ring (44) by a spring ring (40) arranged in a circumferential groove on the slide.

23. The tool head as claimed in one of claims 1 to 22, wherein the basic body (10) has a radially continuous guide groove (30) for the slide (16) without any end limitations, and wherein there is preferably arranged on the side of the sliding block (78) a spacer between the basic body (10) and a cover part (32).

## Revendications

1. Tête d'outil utilisable dans des machines-outils, comportant un corps de base (10), une queue d'outil (24) faisant saillie axialement au-delà du corps de base (10), pouvant être couplée à une broche rotative de machine (26), au moins un coulisseau (16) ajustable transversalement à l'axe du corps de base (12), équipé d'un porte-outil (14) faisant saillie en bout, un dispositif de mesure (18) pour la mesure directe de la course du coulisseau (16) par rapport au corps de base (10), une électronique de mesure disposée dans le corps de base et reliée au dispositif de mesure (18), un servomoteur (20), de préférence électrique, disposé dans le corps de base, agissant sur le coulisseau dans le sens du déplacement, et une unité d'alimentation électrique (22) pour l'électronique de mesure et, le cas échéant, pour le servomoteur, **caractérisée en ce que** le servomoteur (20) avec son carter sensiblement cylindrique (45) est disposé dans un creux transversal (46) du corps de base, orienté transversalement à l'axe du corps de base, coupant l'axe du corps de base (12), l'arbre de sortie (48) étant orienté parallèlement au creux transversal (46).

2. Tête d'outil selon la revendication 1, **caractérisée en ce que** le creux transversal (46) destiné à recevoir le servomoteur (20) est orienté transversalement au sens du déplacement du coulisseau (16) dans le corps de base (10).

3. Tête d'outil selon la revendication 1 ou 2, **caractérisée en ce que** le carter moteur (45) est serré axialement élastiquement dans le corps de base (10).

4. Tête d'outil selon l'une des revendications 1 à 3, **caractérisée en ce que** l'arbre de sortie (48) porte une roue dentée commandée (50) recouvrant à la manière d'un pot l'extrémité côté sortie du carter moteur (45) et couplé avec le mécanisme de déplacement (76 à 84) du coulisseau (16).

5. Tête d'outil selon la revendications 4, **caractérisée en ce que** la roue dentée commandée (50) s'appuie de préférence axialement et radialement, par sa face intérieure de pot, contre une partie du corps de base (rallonge en forme de douille 58) recouvrant l'extrémité côté sortie du carter moteur (45) axialement et circonférentielleent et présentant un alésage central pour le passage de l'arbre de sortie (48).

6. Tête d'outil selon la revendication 4 ou 5, **caractérisée en ce que** la roue dentée commandée (50) s'engage par un tourillon (63) dans un couvercle (66) de préférence en forme de pot rigidement lié au corps de base (10).

7. Tête d'outil selon l'une des revendications 1 à 6, **caractérisée en ce que** la couronne dentée (74) de la roue dentée commandée dirigée radialement vers l'extérieur entoure concentriquement le carter moteur (45) à proximité de l'extrémité côté sortie.

8. Tête d'outil selon l'une des revendications 1 à 7, **caractérisée par** un mécanisme de déplacement du coulisseau (16) qui comporte une tige filetée (77) disposée excentriquement dans le corps de base (10) et portant une crosse (78) avec denture hélicoïdale (80), ainsi qu'une contre-pièce (84) équipée d'une denture hélicoïdale complémentaire (82) et rigidement liée au coulisseau (16), laquelle tige filetée (77) porte un pignon menant (76) engrenant avec la roue dentée commandée (50) dans la zone de la partie recouvrant à la manière d'un pot le carter moteur (45).

9. Tête d'outil selon l'une des revendications 1 à 8, **caractérisée en ce que** l'arbre de sortie (48) du servomoteur (202) est réalisé sous forme de polygone, de préférence d'hexagone, s'engageant dans un polygone femelle (52) de la boue dentée commandée (50), le polygone femelle (52) de la roue dentée commandée présentant une extension axiale plus grande que l'arbre de sortie (48) et étant accessible de l'extérieur à l'aide d'un outil polygonal correspondant.

10. Tête d'outil selon l'une des revendications 1 à 9, **caractérisée en ce que** le corps de base (10) en forme d'anneau est entouré par une enveloppe de préférence métallique (108), dans laquelle sont disposées à distance angulaire les unes des autres des fenêtres (110) destinées à recevoir chacune un émetteur-récepteur infrarouge.

11. Tête d'outil selon la revendication 10, **caractérisée en ce que** le servomoteur (20) peut être fixé élastiquement au corps de base (10), à l'extrémité opposée au côté sortie, à l'aide d'un couvercle tendeur (68) qui comporte de préférence une rallonge faisant saillie radialement vers l'extérieur pour s'engager dans un creux correspondant de l'enveloppe (108) en vue de son entraînement en rotation.

12. Tête d'outil selon l'une des revendications 1 à 11, **caractérisée en ce que** le dispositif de mesure (18) comporte une bobine mobile (86) solidaire du corps de base et un induit en forme de baguette solidaire du coulisseau (88) qui passe dans la bobine mobile dans le sens de déplacement du coulisseau (16).

13. Tête d'outil selon la revendication 12, **caractérisée en ce que** la bobine mobile (86) est disposée dans une armature, solidaire du corps de base, s'engageant dans un creux en forme de poche (92) du coulisseau (16) et que l'induit en forme de baguette (88), solidaire du coulisseau, passe dans le creux en forme de poche (92) et dans la bobine mobile (86) dans le sens du déplacement du coulisseau (16).

14. Tête d'outil selon la revendication 13, **caractérisée en ce que** l'armature de la bobine (90) comporte des languettes de montage (102) faisant saillie latéralement pour la fixation au corps de base (10).

15. Tête d'outil selon la revendication 13 ou 14, **caractérisée en ce que** l'armature (90) de la bobine comporte une chambre de bobine fermée (104).

16. Tête d'outil selon l'une des revendications 13 à 15, **caractérisée en ce que** l'armature (90) de la bobine comporte un creux (106) situé de préférence dans la zone comprise entre les deux languettes de montage (102), ouvert en direction du servomoteur (20), entourant partiellement le carter moteur (45) sur son pourtour.

17. Tête d'outil selon l'une des revendications 12 à 16, **caractérisée en ce que** l'induit (88), par une de ses extrémités, est fixé en saillie en bout à un support d'ajustage (94) qui lui-même est vissé dans un trou taraudé orienté dans le sens du déplacement du coulisseau.

18. Tête d'outil selon la revendication 17, **caractérisée en ce que** l'induit (88), à son extrémité opposée au support d'ajustage (94), porte un tourillon de guidage (98) s'engageant dans un guidage linéaire (96) situé à l'intérieur du coulisseau (16).

19. Tête d'outil selon la revendication 17 ou 18, **caractérisée en ce** que le support d'ajustage (94) peut être bloqué sur le coulisseau (16) à l'aide d'une vis de blocage (100) accessible de l'extérieur dans une position de déplacement prédéfinie du coulisseau (16).

20. Tête d'outil selon l'une des revendications 1 à 19, **caractérisée en ce que** le coulisseau (16), dont le porte-outil (14) traverse un trou oblong frontal (34) du corps de base (10), porte, à l'extérieur du trou oblong (34), un disque annulaire (38), radialement étanche par rapport au coulisseau (16) et entraîné par ce dernier, lequel disque annulaire peut être serré contre un anneau d'étanchéité en élastomère, réalisé de préférence sous forme d'anneau à section carrée (44), situé dans une rainure annulaire frontale (42) du corps de base (10), de manière à maintenir une fente sensiblement constante, de préférence d'une largueur comprise entre 5 et 20 µm, sur le pourtour du disque annulaire (38).

21. Tête d'outil selon la revendication 20, **caractérisée en ce** que l'épaisseur de paroi du disque annulaire (38) peut être diminuée par enlèvement de matière sur sa face tournée vers le corps de base (10) pour le réglage de la largeur de fente prédéfinie.

22. Tête d'outil selon la revendication 20 ou 21, **caractérisée en ce que** le disque annulaire (38) peut être serré contre l'anneau d'étanchéité (44) par une rondelle élastique (40) disposée dans une rainure circonférentielle côté coulisseau.

23. Tête d'outil selon l'une des revendications 1 à 22, **caractérisée en ce que** le corps de base (10) comporte une rainure de guidage (30) radialement continue, sans limitation aux extrémités, pour le coulisseau (16) et qu'une entretoise est de préférence disposée du côté de la crosse (78) entre le corps de base (10) et un couvercle (32).
